# EUROPÄISCHE PATENTSCHRIFT

(11) **EP 1 988 299 B1**
(45) Veröffentlichungstag und Bekanntmachung des Hinweises auf die Patenterteilung: **13.04.2011**
(21) Anmeldenummer: 08103170.0
(22) Anmeldetag: 28.03.2008
(51) Int. Cl.: F16B 33/06, F16B 37/06

(54) **Gestopfte Mutter, insbesondere Schweißmutter**
Plugged nut, in particular weld nut
Ecrou bourré, en particulier écrou à souder

(30) Priorität: 03.05.2007 DE 102007021132
(43) Veröffentlichungstag der Anmeldung: 05.11.2008
(73) Patentinhaber: GS Anlagen- und Immobilien GmbH, 82166 Gräfeling (DE)
(72) Erfinder: Sahm, Joachim, 41063 Mönchengladbach (DE); Nooten, Manfred, 41749 Viersen (DE)
(74) Vertreter: Bonsmann, Joachim Bernhard

(56) Entgegenhaltungen:
- DE-A1- 3 722 760
- GB-A- 2 092 694
- JP-A- 3 113 111

## Beschreibung

Die Erfindung betrifft eine Mutter, insbesondere eine Schweißmutter, die Verwendung derselben zur Herstellung eines beschichtungsfertigen Metallbauteils mit mindestens einer an dem Metallbauteil befestigten Mutter, ein Verfahren zur Herstellung einer gestopften Mutter sowie eine Vorrichtung zur Herstellung von gestopften Muttern, gemäß den Oberbegriffen der unabhängigen Ansprüche.

Zur Vermeidung von Pulver- oder Nasslackrückständen in Gewinden von Schweißmuttern oder anderen angebrachten Muttern in der industriellen Fertigung oder zur Vermeidung störender Beschichtungsrückstände in den Gewindebereichen beim Verzinken, Galvanisieren, Vernickeln, Verchromen etc. mussten bislang die Gewinde der durch Schweißen, Nieten, Einziehen, Kleben etc. am Bauteil bereits angebrachten Muttern einzeln gestopft oder anderweitig verschlossen werden, um das Eindringen von Lack in das Gewinde zu verhindern. Das Stopfen oder anderweitige Verschließen der Gewinde der Muttern jedes einzelnen Bauteils erfolgt konventionell manuell und ist daher zeitaufwendig und nicht von gleichmäßiger Qualität und kann gelegentlich auch einmal bei einzelnen Muttern versehentlich unterbleiben oder auch bewusst unterlassen werden, was in jeden Falle einen hohen Nachbearbeitungsaufwand nach sich zieht.

Aus der DE 24 02 323 A1 ist eine Schweißmutter gemäß dem Oberbegriff des Patentanspruchs 1 bekannt, bei der das Gewindeloch mit einem Stopfen aus einer Wachs-, Plast- oder ähnlichen formbaren Masse oder aus einer Folie verschlossen werden soll. Das rückstandslose Entfernen derartiger Stopfen ist jedoch aufwändig. Zudem sind die bekannten Verschlussmassen oder Folien wenig hitzebeständig und daher z.B. für den Schutz bei Einbrennlackierungen ungeeignet.

Die DE 37 22 760 A1 offenbart eine Schweißmutter mit einem Abdichtelement entweder in Form eines passend vorgeformten, eher inelastischen Stopfens für das Gewindeloch oder in Form eines elastischen Flachmaterials, welches das Gewindeloch an einer Seite abdeckt. Passend vorgeformte Stopfen herzustellen, ist relativ aufwändig, und das flache Abdeckmaterial lässt sich nur bei speziell dafür eingerichteten Muttern verwenden, da es durch Presssitz an der Mutter festgehalten wird.

Die JP 03 113 111 A offenbart eine Schweißmutter, in deren Gewindeloch ein flüssiges Abdichtmittel eingespritzt und dann gebacken wird, um einen Maskenteil auszubilden. Damit nicht zu viel oder zu wenig Gewindeoberfläche abgedeckt wird, muss das Einspritzen des flüssigen Abdichtmittels sehr gezielt und genau dosiert erfolgen, was kompliziert ist.

Die GB 2 092 694 A offenbart eine Schweißmutter mit einem Abdichtelement in Form eines passend vorgeformten Stopfens für das Gewindeloch, der aus einem wasserlöslichen Polymer bestehen kann. Passend vorgeformte Stopfen herzustellen, ist relativ aufwändig, und Stopfen aus wasserlöslichem Polymer sind wenig hitzebeständig.

Die vorstehend genannten Probleme werden durch die in den unabhängigen Ansprüchen definierten Gegenstände, Verfahren und Vorrichtungen gelöst.

Erfindungsgemäß werden die Gewinde der Muttern vor der Verarbeitung am Bauteil - d.h. im Gegensatz zum Stand der Technik schon in einem Zustand, in dem die Mutter noch nicht mit einem Bauteil verbunden ist - auf eine effiziente und gleichmäßige Weise mit einem elastischen Stopfen verschlossen, und die anschließende Verarbeitung ist ohne wesentliche technische Einschränkungen möglich. Insbesondere beeinträchtigen die erfindungsgemäßen vorgestopften Muttern weder den folgenden Schweißprozess noch den Beschichtungsprozess. Weil der Stopfen einstückig und zylindrisch geformt ist, kann er nach dem Beschichtungsprozess durch einfaches Herausdrücken - beispielsweise mittels eines Dorns - entfernt werden, ohne dass Rückstände von Stopfenmaterial oder Lack im Gewinde zurückbleiben. Der Stopfen kann auch zunächst in der Mutter verbleiben, so dass dieser das Gewinde weiterhin schützt, und braucht erst bei der Montage des Bauteils entfernt zu werden.

Durch die Erfindung vereinfacht sich der Fertigungsprozess von Bauteilen mit daran angebrachten Muttern wesentlich, vor allem durch den Entfall des manuellen Stopfens von Gewinden nach dem Anbringen der Muttern und vor dem Beschichten. Die vorgestopften Muttern können in der Schweißerei in allen benötigten Größen auf Vorrat gehalten werden, es ist jedoch keine separate Vorratshaltung unterschiedlicher Stopfen erforderlich, da jede Mutter den jeweils passenden Stopfen bereits enthält. Der verringerte Arbeitsaufwand macht sich besonders an schwer zugänglichen Stellen bemerkbar, an denen das Stopfen bislang mühsam war. Auch ist es nicht mehr möglich, dass einzelne Muttern versehentlich ungestopft bleiben, was besonders mühsame Nacharbeiten erforderlich machen würde.

Durch den Wegfall des zeitraubenden Stopfens zwischen dem Schweißen und dem Lackieren können die Bauteile schneller vorbereitet werden, so dass die zeitlichen und räumlichen Abstände in einer kontinuierlich betriebenen Lackieranlage reduziert werden können, zumal auch ein Ausstoßen der Stopfen nach dem Lackieren mit geringem Zeitaufwand möglich ist.

In der bevorzugten Ausführungsform ist der Stopfen so lang, dass er an beiden axialen Enden der Mutter einen definierten Überstand über die Gewindegänge der Mutter aufweist. Dadurch bleiben die Gewindegänge an den Enden der Mutter mit Sicherheit frei von Farbe oder Pulver, und es kann zuverlässig verhindert werden, dass sich ein störender Grat am Gewinde bildet. Somit muss das Gewinde nach dem Ausstoßen des Stopfens nicht nachbearbeitet werden, wie es bei manuellem Stopfen häufig vorkommt, sondern ist lehrenhaltig und erlaubt somit problemloses Ansetzen einer Schraube.

Zwar müssen die vorgestopften Schrauben in den nötigen Größen bevorratet werden, dafür entfällt aber eine Bevorratung mit konventionellen Abdeckstopfen. Es existieren preiswerte Materialien, aus denen die erfindungsgemäßen Stopfen hergestellt werden können, daher können die Stopfen als Einweg-Stopfen ausgebildet sein. Damit entfällt ein aufwändiges Sortieren der verschiedenen Stopfen nach dem Entstopfen.

Die Erfindung ist bei allen Gewindedurchmessern anwendbar, und sie ist sowohl bei Schweißmuttern, die elektrisch punktgeschweißt werden, als auch bei gewöhnlichen Muttern anwendbar, die schmelzgeschweißt werden. In beiden Fällen hat das Vorhandensein der Stopfen keine ungünstigen Auswirkungen auf den Schweißprozess.

Zum elektrischen Punktschweißen muss eventuell die an die Mutter anzulegende Elektrode geringfügig geändert werden, um einen Freiraum für überstehendes Stopfenmaterial zu schaffen.

Der Stopfen kann aus einem Vollmaterial bestehen, oder er kann entlang seiner Achse hohl sein. Vorzugsweise wird als Material des Stopfens ein Material gewählt, das bis mindestens 250 °C temperaturbeständig ist. Ein besonders geeignetes Stopfenmaterial ist Moosgummi. Ein Material mit den Eigenschaften von Moosgummi oder ein ähnliches Material verjüngt sich beim Dehnen erheblich, so dass die Muttern leicht herüber gleiten können.

Zur Herstellung von lackierfertigen Metallbauteilen mit angeschweißten Muttern wird zuerst ein schnur- oder schlauchförmiges elastisches Material mit rundem Querschnitt und mit einem Durchmesser größer als der Durchmesser des Gewindelochs der Mutter in die Länge gezogen, so dass es sich verjüngt. In diesem Zustand wird es durch das Gewindeloch der Mutter gefädelt und dann - vorzugsweise nach Entspannung des Materials - radial abgeschnitten. Wenn das schnur-oder schlauchförmige elastische Material vor dem radialen Abschneiden nicht entspannt wird, tritt eine meist unerwünschte Verkürzung beim späteren Entspannen auf. Das elastische Material bewirkt einen farbdichten Verschluss der Endgewindegänge der Mutter, wobei aber der nicht mit Gewinde versehene Teil der Mutter beim späteren Lackiervorgang erfasst wird. Die so vorbereitete Mutter wird entweder sofort oder zumeist erst später, bei der Bauteilefertigung, an ein Bauteil geschweißt.

Das erfindungsgemäße Verfahren zum Stopfen von Muttern kann manuell, halbmaschinell oder maschinell durchgeführt werden. Zwei Vorrichtungen, die zur Erleichterung des manuellen Stopfens oder zur Durchführung von halbmaschinellem oder maschinellem Stopfen geeignet sind, sind in den unabhängigen Ansprüchen angegeben. Für den Fachmann ergeben sich leicht weitere hierfür geeignete Vorrichtungen.

Die Erfindung wird nachfolgend anhand der Zeichnungen beispielhaft näher erläutert. Es zeigen:
- Fig. 1: perspektivisch das Anschneiden einer elastischen Rundschnur und das Auffädeln von Schweißmuttern auf die Rundschnur in definierten Abständen;
- Fig. 2: perspektivisch das Trennen der Rundschnur mit aufgefädelten Schweißmuttern zwischen je zwei Schweißmuttern; und
- Fig. 3: eine Schnittansicht einer abgestopften Schweißmutter, fertig zur weiteren Verarbeitung.

Zur Herstellung eines Satzes abgestopfter Schweißmuttern werden zunächst die Schweißmuttern in den benötigten Größen und eine Anzahl von Rundschnüren aus Moosgummi in verschiedenen Durchmessern bereitgestellt, wobei die Rundschnüre jeweils einen etwas größeren Durchmesser als die Gewindelöcher der Schweißmuttern aufweisen.

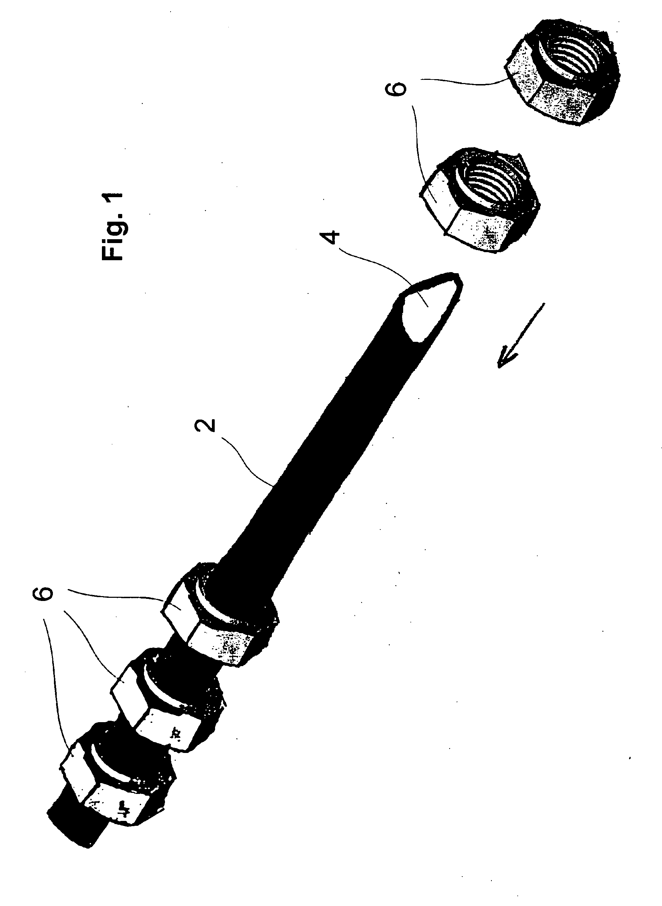

Wie in Fig. 1 veranschaulicht, wird die Rundschnur 2 an einem Ende 4 spitz zulaufend angeschnitten, und das angeschnittene Ende 4 wird durch eine Schweißmutter 6 gefädelt. Die Schweißmuttern 6 sind in diesem Beispiel solche mit Zentrierkragen und drei vorstehenden Ecken, die beim Punktschweißen (auch Buckelschweißen) an ein Bauteil angeheftet werden.

Wenn das angeschnittene Ende 4 nach dem Einfädeln etwas aus der Schweißmutter 6 hervorsteht, kann daran gezogen werden, wobei sich die Rundschnur 2 dehnt und die Schweißmutter 6 in Richtung des Pfeils in Fig. 1 auf die Rundschnur 2 gleiten kann. Dieser Vorgang wird wiederholt durchgeführt, wobei die Schweißmuttern 6 der Reihe nach auf die Rundschnur 2 aufgebracht werden, derart, dass diese im entspannten Zustand der Rundschnur 2 einen definierten konstanten Abstand voneinander haben.

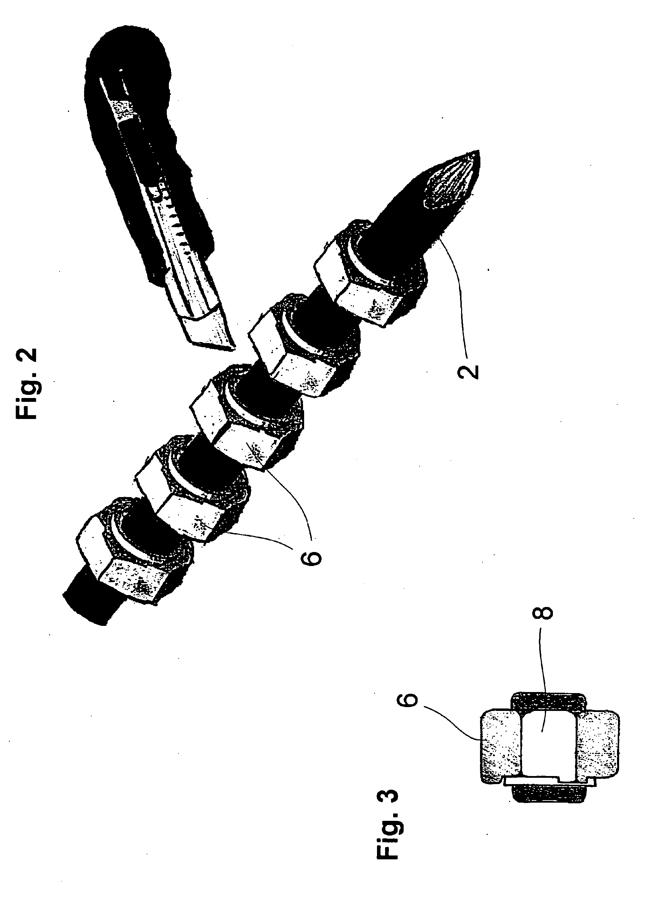

Wie in Fig. 2 veranschaulicht, wird die Rundschnur 2 dann zwischen je zwei Schweißmuttern 6 quer zur Länge der Rundschnur 2 durchgeschnitten.

Somit erhält man abgestopfte Schweißmuttern 6 mit einem Querschnitt wie in Fig. 3 gezeigt, in denen sich jeweils ein Stopfen 8 aus Moosgummi befindet. Man beachte, dass die Enden des Stopfens 8 kleine Wülste um die letzten Gewindegänge der Schweißmutter 6 ausbilden, die das Gewinde zuverlässig abdichten.

Das unter Bezugnahme auf die Zeichnungen beschriebene Verfahren ist nur beispielhaft, und in der Praxis wird man verschiedene Hilfsmittel zur Herstellung der abgestopften Schweißmuttern 6 verwenden.

Eine solche Vorrichtung, die zeichnerisch nicht dargestellt ist, enthält zum Beispiel eine stiftförmige Einrichtung, eine Art Nadel, die dafür eingerichtet ist, durch mindestens eine Mutter gefädelt zu werden, dann ein Ende eines schnur- oder schlauchförmigen elastischen Materials mit einem Durchmesser größer als der Durchmesser des Gewindelochs der Muttern zu ergreifen und dann das Material in die Länge zu ziehen, so dass die mindestens eine Mutter - vorzugsweise eine Gruppe von Muttern - von der stiftförmigen Einrichtung auf das Material gelangen kann.

Bei einer anderen geeigneten Vorrichtung ist die stiftförmige Einrichtung dafür eingerichtet, ein Ende eines schnur- oder schlauchförmigen elastischen Materials mit einem Durchmesser größer als der Durchmesser des Gewindelochs der Muttern zu ergreifen, dann das Material parallel zur stiftförmigen Einrichtung in die Länge zu ziehen, dann zusammen mit dem Material durch mindestens eine Mutter gefädelt zu werden und dann von dem Ende des Materials gelöst und unter Zurücklassung des Materials in der mindestens einen Mutter aus der mindestens einen Mutter herausgezogen zu werden.

Die stiftförmige Einrichtung wird vorzugsweise senkrecht angeordnet, und es können auch Mittel zum automatischen Durchschneiden des die Muttern tragenden schnur- oder schlauchförmigen elastischen Materials vorgesehen werden.

## Patentansprüche

1. Mutter, insbesondere Schweißmutter, bei der das Gewindeloch der Mutter (6) in einem Zustand, in dem die Mutter (6) noch nicht mit einem Bauteil verbunden ist, mit einem einstückigen zylindrischen Stopfen (8) aus einem elastischen Material ausgefüllt ist, der einen definierten Durchmesser und eine definierte Länge aufweist,
**dadurch gekennzeichnet, dass**
der Durchmesser des Stopfens in einem entspannten Zustand des Stopfens, in dem sich dieser außerhalb des Gewindelochs befindet, größer als der Durchmesser des Gewindelochs ist.

2. Mutter nach Anspruch 1,
**dadurch gekennzeichnet, dass**
der Stopfen (8) so lang ist, dass er an beiden axialen Enden der Mutter (6) einen definierten Überstand über die Gewindegänge der Mutter und/oder die Stirnseiten der Mutter hat.

3. Mutter nach Anspruch 1 oder 2,
**dadurch gekennzeichnet, dass**
- der Stopfen (8) aus einem Vollmaterial besteht und/oder
- dass der Stopfen (8) entlang seiner Achse hohl ist und/oder
- dass das Material des Stopfens (8) bis wenigstens 250 °C temperaturbeständig ist und/oder
- dass der Stopfen (8) aus Moosgummi besteht.

4. Verwendung einer Mutter nach einem der vorhergehenden Ansprüche zur Herstellung eines lackierfertigen Metallbauteils mit mindestens einer an dem Metallbauteil befestigten Mutter, insbesondere einer Schweißmutter.

5. Verfahren zur Herstellung einer gestopften Mutter, insbesondere einer Schweißmutter,
**dadurch gekennzeichnet, dass**
ein schnur- oder schlauchförmiges elastisches Material (2) mit einem Durchmesser größer als der Durchmesser des Gewindelochs der Mutter (6) in die Länge gezogen wird, so dass es sich verjüngt, und in diesem Zustand durch das Gewindeloch der Mutter gefädelt und dann radial abgeschnitten wird.

6. Verfahren nach Anspruch 5,
**dadurch gekennzeichnet, dass**
das Verfahren bei der Herstellung eines lackierfertigen Metallbauteils mit mindestens einer an dem Metallbauteil befestigten gestopften Mutter durchgeführt wird, indem zuerst das schnur- oder schlauchförmige elastische Material (2) in die Länge gezogen wird, so dass es sich verjüngt, und in diesem Zustand durch das Gewindeloch der Mutter gefädelt und dann radial abgeschnitten wird, und später die Mutter an dem Bauteil befestigt, insbesondere geklebt oder gepresst oder mit dem Bauteil elektrisch verschweißt wird.

7. Verfahren nach Anspruch 5 oder 6,
**dadurch gekennzeichnet, dass**
- das schnur- oder schlauchförmige elastische Material (2) vor dem radialen Abschneiden axial entspannt wird und/oder
- dass das schnur- oder schlauchförmige elastische Material (2) bis wenigstens 250 °C temperaturbeständig ist und/oder
- dass das schnur- oder schlauchförmige elastische Material (2) aus Moosgummi besteht.

8. Vorrichtung zur Herstellung von gestopften Muttern, insbesondere Schweißmuttern,
**dadurch gekennzeichnet, dass**
die Vorrichtung eine stiftförmige Einrichtung aufweist, die entweder
- dahingehend ausgebildet ist, durch mindestens eine Mutter (6) gefädelt zu werden, dann ein Ende eines schnur- oder schlauchförmigen elastischen Materials (2) mit einem Durchmesser größer als der Durchmesser des Gewindelochs der mindestens einen Mutter zu ergreifen und dann das Material in die Länge zu ziehen, so dass die mindestens eine Mutter von der stiftförmigen Einrichtung auf das Material gelangen kann, oder
- dafür eingerichtet ist, ein Ende eines schnur- oder schlauchförmigen elastischen Materials (2) mit einem Durchmesser größer als der Durchmesser des Gewindelochs der Muttern (6) zu ergreifen, dann das Material parallel zur stiftförmigen Einrichtung in die Länge zu ziehen, dann zusammen mit dem Material durch mindestens eine Mutter gefädelt zu werden und dann von dem Ende des Materials gelöst und unter Zurücklassung des Materials in der mindestens einen Mutter herausgezogen zu werden.

9. Vorrichtung nach Anspruch 8,
**dadurch gekennzeichnet, dass**
- die Vorrichtung weiterhin Mittel zum Durchschneiden des die Muttern (6) tragenden schnur- oder schlauchförmigen elastischen Materials (2) umfasst, und/oder
- dass die stiftförmige Einrichtung bei bestimmungsgemäßer Verwendung senkrecht orientiert ist.

## Claims

1. A nut, in particular a welding nut, in which the threaded hole in the nut (6) in a condition in which the nut (6) is not yet connected to a component is filled with an integral cylindrical plug (8) of an elastic material, which is of a defined diameter and a defined length,
**characterised in that**
the diameter of the plug in a relieved condition of the plug in which it is outside the threaded hole is larger than the diameter of the threaded hole,

2. A nut according to claim 1 **Characterised in that** the plug (8) is of such a length that at both axial ends of the nut (6) it has a defined protrusion beyond the thread flights of the nut and/or the ends of the nut.

3. A nut according to claim 1 or claim 2 **characterised in that**
- the plug (8) comprises a solid material and/or
- the plug (8) is hollow along its axis and/or
- the material of the plug (8) is temperature-resistant to at least 250°C and/or
- the plug (8) comprises foam rubber.

4. Use of a nut according to one of the preceding claims for the production of a metal component ready for painting having at least one nut fixed to the metal component, in particular a welding nut.

5. A process for the production of a plugged nut, in particular a welding nut,
**characterised in that**
an elastic material (2) in cord or tube form and of a diameter larger than the diameter of the threaded hole in the nut (6) is drawn in length so that it is thinned down and **in that** condition is threaded through the threaded hole in the nut and is then radially cut off.

6. A process according to claim 5 **characterised in that** in the production of a metal component ready for painting the process is carried out with at least one plugged nut fixed to the component, by a procedure whereby firstly the elastic material (2) in cord or tube form is drawn in length so that it is thinned down and **in that** condition is threaded through the threaded hole in the nut and is then radially cut off, and later the nut is fixed to the component, in particular is glued or pressed thereto or is electrically welded to the component.

7. A process according to claim 5 or 6 **characterised in that**
- the elastic material (2) in cord or tube form is axially relieved prior to the radial cutting operation and/or
- the elastic material (2) in cord or tube form is temperature-resistant to at least 250°C and/or
- the elastic material (2) in cord or tube form comprises foam rubber.

8. Apparatus for the production of plugged nuts, in particular welding nuts, **characterised in that**
the apparatus has a device in pin form which either
- is designed to be threaded through at least one nut (6), then to grip an end of an elastic material (2) in cord or tube form and of a diameter larger than the diameter of the threaded hole of the at least one nut, and then to draw the material in length so that the at least one nut can pass from the device in pin form onto the material, or
- is adapted to grip an end of an elastic material (2) in cord or tube form and of a diameter larger than the diameter of the threaded hole in the nuts (6), then to draw the material in length parallel to the device in pin form, then to be threaded together with the material through at least one nut and then to be released from the end of the material and to be pulled out leaving the material behind in the at least one nut.

9. Apparatus according to claim 8 **characterised in that**
- the apparatus further includes means for cutting through the elastic material (2) in cord or tube form that carries the nuts (6), and/or
- the device in pin form is oriented perpendicularly in use as required.

## Revendications

1. Ecrou, en particulier écrou à souder, dans lequel le trou fileté de l'écrou (6), dans un état dans lequel l'écrou (6) n'est pas encore connecté à un composant, est rempli avec un bouchon cylindrique d'une seule pièce (8) en matériau élastique qui présente un diamètre défini et une longueur définie,
**caractérisé en ce que**
le diamètre du bouchon, dans un état détendu du bouchon, dans lequel il se trouve en dehors du trou fileté, est supérieur au diamètre du trou fileté.

2. Ecrou selon la revendication 1,
**caractérisé en ce que**
le bouchon (8) a une longueur telle qu'il dépasse aux deux extrémités axiales de l'écrou (6) d'un débord défini au-delà des pas de filetage de l'écrou et/ou des côtés frontaux de l'écrou.

3. Ecrou selon la revendication 1 ou 2,
**caractérisé en ce que**
- le bouchon (8) se compose d'un matériau massif et/ou
- **en ce que** le bouchon (8) est creux le long de son axe et/ou
- **en ce que** le matériau du bouchon (8) est résistant à la température jusqu'à au moins 250°C et/ou
- **en ce que** le bouchon (8) se compose de caoutchouc moussue.

4. Utilisation d'un écrou selon l'une quelconque des revendications précédentes, pour la fabrication d'un composant métallique prêt au laquage, comprenant au moins un écrou fixé au composant métallique, notamment un écrou à souder.

5. Procédé de fabrication d'un écrou bourré, notamment d'un écrou à souder,
**caractérisé en ce que**
qu'un matériau élastique (2) en forme de cordon ou de flexible, ayant un diamètre supérieur au diamètre du trou fileté de l'écrou (6), est étiré en longueur de telle sorte qu'il se rétrécisse, et est enfilé dans cet état à travers le trou fileté de l'écrou, puis est sectionné radialement.

6. Procédé selon la revendication 5,
**caractérisé en ce que**
le procédé est réalisé lors de la fabrication d'un composant métallique prêt au laquage, comprenant au moins un écrou bourré fixé sur le composant métallique, **en ce que** le matériau élastique (2) en forme de cordon ou de flexible est d'abord étiré en longueur de telle sorte qu'il se rétrécisse, et est enfilé dans cet état à travers le trou fileté de l'écrou, puis est sectionné radialement, et ultérieurement l'écrou est fixé au composant, notamment par collage ou pressage ou est soudé électriquement au composant.

7. Procédé selon la revendication 5 ou 6,
**caractérisé en ce que**
- le matériau élastique (2) en forme de cordon ou de flexible est détendu axialement avant le sectionnement radial et/ou
- **en ce que** le matériau élastique (2) en forme de cordon ou de flexible est résistant à la température jusqu'à au moins 250°C et/ou
- **en ce que** le matériau élastique (2) en forme de cordon ou de flexible se compose de caoutchouc mousse.

8. Dispositif de fabrication d'écrous bourrés, en particulier d'écrous à souder,
**caractérisé en ce que**
le dispositif présente un dispositif en forme de goupille, qui soit :
- est réalisé pour être enfilé à travers au moins un écrou (6), puis pour saisir une extrémité d'un matériau élastique (2) en forme de cordon ou de flexible ayant un diamètre supérieur au diamètre du trou fileté de l'au moins un écrou et pour ensuite étirer le matériau en longueur de telle sorte que l'au moins un écrou puisse parvenir du dispositif en forme de goupille jusqu'au matériau, soit
- est prévu pour saisir une extrémité d'un matériau élastique (2) en forme de cordon ou de flexible ayant un diamètre supérieur au diamètre du trou fileté des écrous (6), puis pour étirer en longueur le matériau parallèlement au dispositif en forme de goupille, puis pour être enfilé conjointement avec le matériau à travers au moins un écrou, et ensuite pour être libéré par l'extrémité du matériau et être ressorti en laissant le matériau dans l'au moins un écrou.

9. Dispositif selon la revendication 3,
**caractérisé en ce que**
- le dispositif comprenant en outre des moyens pour sectionner le matériau élastique (2) en forme de cordon ou de flexible portant les écrous (6), et/ou
- **en ce que** le dispositif en forme de goupille est orienté verticalement dans le cas d'une utilisation conforme.
